(19)

Europäisches
Patentamt
European
Patent Office
Office européen
des brevets

(11) **EP 2 136 601 A2**

(12) **EUROPEAN PATENT APPLICATION**

(43) Date of publication:
**23.12.2009 Bulletin 2009/52**

(51) Int Cl.:
***H04W 84/18*** (2009.01)

(21) Application number: **09163316.4**

(22) Date of filing: **19.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **20.06.2008 IT TO20080488**

(71) Applicant: **SELEX COMMUNICATIONS S.p.A.**
**16151 Genova (IT)**

(72) Inventors:
• **Armani, Claudio**
**16129 Genova (IT)**
• **Loreti, Pier Paolo**
**00178 Roma (IT)**

• **Mazzenga, Franco**
**00145 Roma (IT)**
• **Cipolla, Vincenzo**
**56125 Pisa (IT)**
• **Marabissi, Dania**
**53042 Chianciano Terme (IT)**
• **Porzio Giusto, Pietro**
**00189 Roma (IT)**

(74) Representative: **Jorio, Paolo et al**
**STUDIO TORTA**
**Via Viotti 9**
**10121 Torino (IT)**

(54) **Advanced secure node for wideband on-the-move applications in networks with meshed topology, and management method**

(57)    A node structure (2) for wideband mobile-radio applications, configured to enable connection with further nodes according to a role that can be dynamically selected among a network-manager role, an intermediate node role, and a leaf role. Each node is formed by a radio base station (BS) that manages downlink transmission and uplink reception, and a mobile station (MS) that manages downlink reception and uplink transmission. The radio base station and the mobile station are each formed by a respective stack of control layers that each include a data-connection functions managing layer (MAC) and a physical connection managing layer (PHY). The data-connection functions managing layer (MAC) is formed by a top interface unit (MAC SSCS), a basic-connection functions managing unit (CPCS), and a security functions managing unit (SSL), for each stack of control layers, and by a network-information processing unit (MESH LAYER), common to both stacks of control layers and connected to the top interface unit and to the basic-connection functions managing unit of both stacks. The physical connection managing layer is formed by a communication-time intervals managing unit (PHY FRAMING) and by a data-signals generating unit (PHY RF), which are common to both stacks.

Fig.2

## Description

The present invention relates to a structure and a method of communication of advanced nodes for wideband mobile-radio applications. In general, the present invention is intended to guarantee the connectivity in networks, the nodes whereof are in limited number and can have incomplete mesh structures that vary over time.

The applicability area of the invention is extremely wide and extends from tactical military networks for operating missions (control of the territory, peacekeeping) up to civilian networks for optimized coverage of the territory (mountain networks, urban networks with relay functions installed on moving means), including strategic military networks, networks used by security forces (police), networks for national and international emergencies, and, finally, networks for information technology applied to public administration.

In particular, the present invention applies to meshed-topology networks compatible with WiMAX technology.

As is known, WiMAX (Worldwide Interoperability for Microwave Access), defined by the IEEE standard 802.16e-2005, is a technology that enables access to wideband and wireless telecommunication networks.

The acronym has been defined by the WiMAX Forum, a body formed by more than three hundred companies, the purpose whereof is to develop, supervise, promote, and test interoperability of systems based upon the IEEE standard referred to above.

In traditional systems, the radio technologies structured for being used in hierarchical networks of a point-multipoint type typically in use in mobile-radio systems for the management of public cell networks (and envisaged also by the WiMAX standard) are different from the radio technologies devised for use in meshed parity networks, typically in use in even important market niches, such as sensor systems or networks for military security and for the police. This fact has generated and continues to generate discontinuities in the technological development and does not enable, in general, reuse of the solutions horizontally, i.e., irrespective of the network application of reference.

The aim of the present invention is to propose a node architecture enabling a radiocommunication system to be obtained integrating the characteristics of both of the existing network topologies.

According to the present invention there are provided a node structure for wideband mobile-radio applications and a corresponding communications managing method, as defined in claims 1 and 10, respectively.

For a better understanding of the invention, an embodiment thereof is now described, purely by way of non-limiting example with reference to the attached drawings, wherein:

-   Figure 1 shows an example of meshed-topology network, to which the invention applies;

-   Figure 2 shows the architecture of a node according to the invention, usable in the network of Figure 1;
-   Figure 3 shows the diagram of the structure of a MAC sublayer of the node of Figure 2 and its connection to the adjacent sublayers;
-   Figure 4 shows the conceptual diagram of the structure of a physical sublayer of the node of Figure 2;
-   Figures 5 and 6 show different diagrams of the physical sublayer of Figure 4;
-   Figure 7 shows a flowchart of the synchronization procedure in the absence of GPS;
-   Figure 8 shows the conceptual synchronization time sequence in the absence of GPS;
-   Figures 9a and 9b illustrate the structure of a slot for a radio base station BS and a mobile station MS, respectively;
-   Figure 10 shows an OFDMA coding usable in the physical sublayer of the node of Figure 2;
-   Figures 11a and 11b show the allocation data in a frame according to the WiMAX standard and according to the present node, as viewed from a mobile station;
-   Figure 12 shows a block diagram of the structure of the physical sublayer of Figure 4; and
-   Figure 13 shows a logic diagram for managing the physical sublayer of Figure 4.

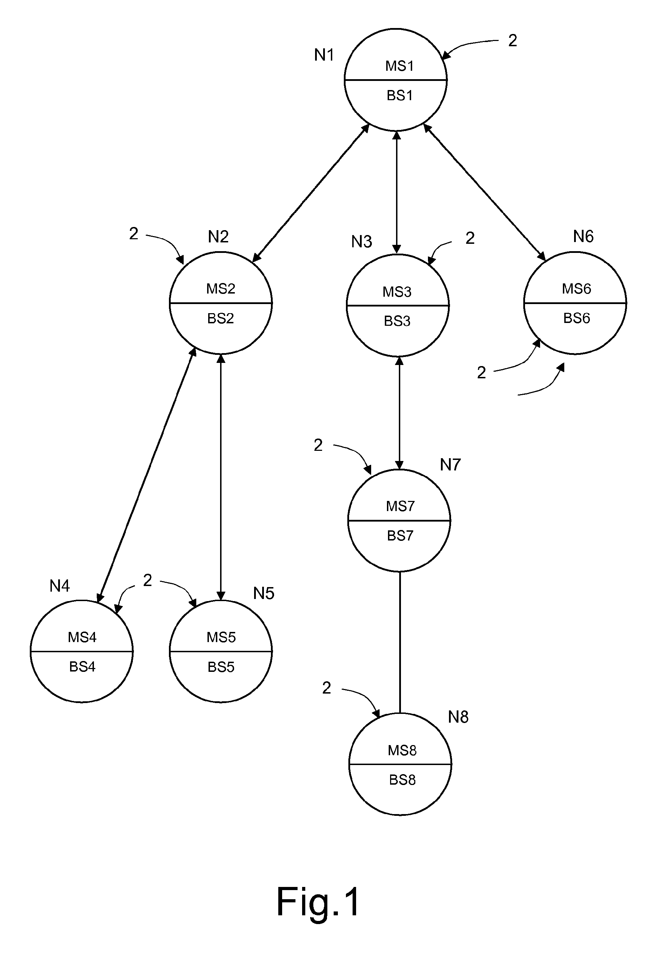

Figure 1 shows an example of a meshed network 1 compatible with the WiMAX standard and formed by a plurality of nodes 2, here eight nodes identified by N1-N8. The meshed network 1 has the structure described in Italian patent application No. TO2007A000441 filed in the name of the present applicant, wherein each node N1-N78 is formed by a radio base station BS and by a user station or mobile station MS.

Each node N1-N8 has a different topological role, defined according to whether it is or is not affiliated to another node or in turn affiliates or not other nodes. In particular, a node (here the node N1) having master functions and typically not affiliated to any other node is defined as "root node"; other nodes that are both affiliated and affiliating (herein nodes N2, N3, N7) are defined as "internal nodes", while the nodes that do not have other affiliated nodes (here nodes N4, N5, N6 and N8) are defined as "leaf nodes". According to the role of each node N1-N8 in the meshed network 1 (root, intermediate, or leaf), both radio base station BS and mobile station MS of the nodes N1-N8 may be active, typically in the case of intermediate node (in the example, the nodes N2, N3 and N7), or else just the radio base station BS may be active, typically in the case of root node N1, or else just the mobile station MS may be active, typically in the case of leaf nodes N4-N6 and N8.

Nodes 2 communicate using time intervals or time slots within a single frame in the entire network. In particular, according to the standard 802.16.2005, each frame can comprise up to eight slots, and the frames present periodically. Furthermore, as described in above Italian patent application No. TO2007A000441, one or more slots are assigned to each node 2 in a scheduled way with cadenced frame, and the mobile station MS of each internal node N2, N3 and N7 can become active only when the associated radio base station BS is not involved in the communication.

With this topology, as indicated in the above Italian patent application No. TO2007A000441, bidirectional communications between the radio base station BS and the mobile station MS (i.e., multiple relay versus multiple relay, and multiple relay versus mobile station) are allowed but communications between radio base stations BS or between mobile stations MS are not allowed. Each mobile station MS is synchronized and communicates with just one radio base station BS. In practice, in the diagram of Figure 1, the mobile station MS1 of the root node N1, here not affiliated to other nodes, is used only for measurements, while its radio base station BS1 is connected to the mobile stations MS2, MS3 and MS6 of the intermediate nodes N2, N3, as well as of the leaf node N6; mobile radio stations BS2 and BS7 of the intermediate nodes N2 and N7 are connected to mobile stations MS4, MS5 and MS8 of leaf nodes N4, N5 and N8; radio base station BS3 of intermediate node N3 is connected to mobile station MS7 of intermediate node N7; while radio base stations BS4-BS6 and BS8 of leaf nodes N4-N6 and N8 are not connected to other mobile stations and are used only in extraordinary management procedures.

The root node of a network has the function of creating the backbone of the network, thus defining the role of each node in the communication time frame used in the network. To this end, the root node sends, to each node of the network, commands enabling the different functionalities of the network.

*I.a.*, the root node executes algorithms for controlling the mesh network and supervises the following operations:

- Backbone management: this procedure enables modifications to the network topology as role changes due to movement and to possible new entries/exits to/from the network, including network relocation of the root node:

- New node network entry management: this procedure enables affiliation, as a leaf node, of a new node previously not connected to the network;
- Mobility management: this procedure authorizes/forbids handover (topological role change) of the network nodes;
- New node/network discovery: this procedure programs the times when the leaf nodes should go into exploration for seeking data on possible new nodes/networks;
- Link failure management: this procedure co-ordinates topology maintenance operations following upon connection problems of internal nodes;

- Collection measurements: this procedure enables creation of node visibility matrix and distribution of the visibility matrix to all nodes of the network.

To be able to implement the control algorithms referred to above, the nodes 2 of the network exchange messages using dedicated signalling, co-ordinated by the root node. Each root node or internal node of the network uses a preamble in the messages, and the different preambles used within the network are known to the root node. The discovery of new nodes/networks can occur following upon the measurement-collection procedure, when the mobile section MS of a node of the network identifies a preamble, issued by the radio-base section of a new node/network and generally different from the ones used in the network. Since the measurement procedure is a prerogative of the mobile section MS of the nodes, it enables identification of new nodes by all the nodes of the network (also the root node can activate periodically its own mobile section MS to this end). Since, however, the leaf nodes have their own radio base station BS inactive and do not issue any preamble, they could not be detected by the measurement procedure. This situation is, however, disadvantageous, in so far as the encounter between two networks frequently tends to take on the configuration of an encounter between two nodes of a leaf type. To overcome this limitation, the root node periodically activates all the leaf nodes of its network in exploration mode for exploring the surrounding areas.

Each node 2 has an architecture extended to the first two layers of the ISO-OSI model, and specifically the physical layer and the data-link layer. Furthermore, all the functions corresponding to management of the communications within the network are defined within the first two above layers. Here, the data-link layer is referred to as MAC (Media Access Control) layer. The two layers, physical and MAC, are then in turn organized into architectural sublayers. Each sublayer defines a set of services for the higher sublayer and is characterized through the service access points (SAPs).

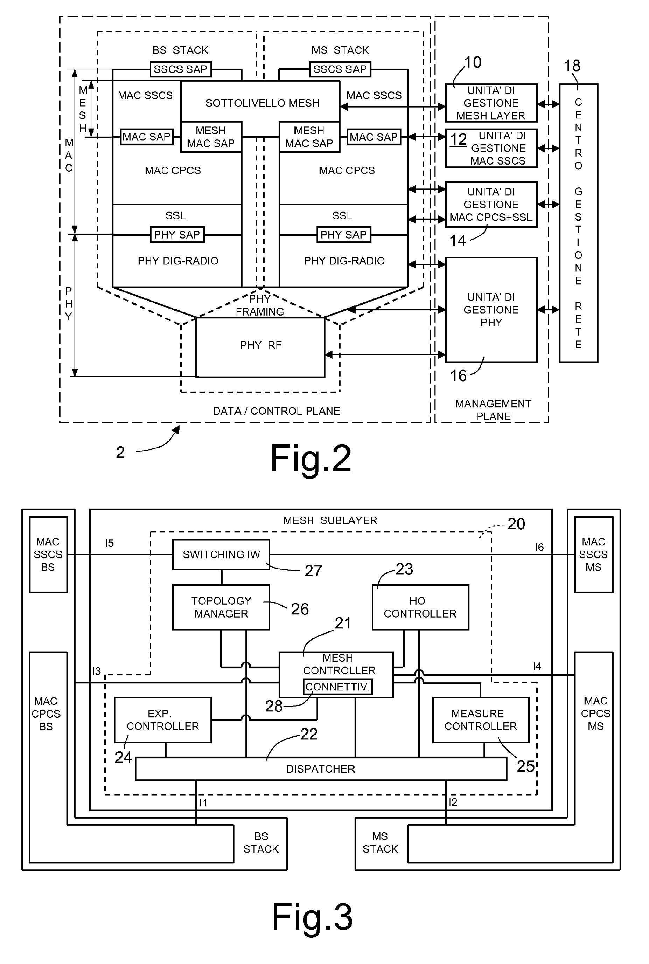

Figure 2 shows the architecture of the nodes 2 as an architecture with two base protocol stacks: the stack of the radio base station BS (BS STACK) and the stack of the mobile station MS (MS STACK). In detail, on the basis of the IEEE standard 802.16e-2005, both stacks BS STACK and MS STACK comprise a physical layer, designated by PHY, and a MAC layer. The physical layer is in part shared by the two stacks.

In particular, in a known way, the MAC layer comprises a sublayer MAC SSCS (Service Specific Convergence Sublayer), forming an interface with the higher layers; a sublayer CPCS (Common Part Convergence Sublayer), supplying the basic functionalities of the MAC layer; and a security sublayer SSL, performing the functions necessary for providing secure communications. Furthermore, the physical layer PHY comprises a sublayer PHY DIG-RADIO, which executes the digital processing of the signals received/sent from/to the outside world and includes the analog-to-digital conversion units, the processing units for OFDMA and/or CDMA transceivers (for example, IFFT/FFT units, matched-filter receivers, units for channel estimation and synchronization, units for channel coding and decoding). The physical layer PHY further comprises an RF sublayer that manages the various frequencies used. SAP interfaces are envisaged between the various sublayers.

A MAC sublayer, referred to as MESH sublayer, positioned within the sublayer MAC SSCS and shared by the two stacks, manages both processing of the data messages ("Data Unit") necessary for executing specific control functions (such as turning-on and turning-off of the respective radio base station BS and management of the associations between the nodes 2) and the support to routing of the data messages (PDU/SDU Protocol/ Service Data Units) from the radio base station BS to the mobile section MS and vice versa. In particular, it includes the functions typical of a Network Layer (e.g., Switching, Routing, Flow Classification), those of a Logical Link Control (LLC) and those enabling management of the respective node 2 based on its role within the meshed network.

Furthermore, the MESH sublayer enables communication between the two sublayers MAC SSCS of the BS and MS stacks. The MESH sublayer co-operates with the two sublayers MAC SSCS and uses its own SAP interfaces (MESH MAC SAP) for the communications with the sublayers CPCS.

The nodes 2 of the network communicate using MESH warnings through a succession of packet transmissions transferred to the MAC layer according to the same modalities used by the WiMAX standard for transferring the management channel (within the primary management channel). Transport of the MESH warning messages toward the antenna interface occurs through the sublayers MAC-CPCS, SSL, PHY-DIG-RADIO and PHY-FRAMING of Figure 2 as encapsulated in the payload of a MAC PDU (Protocol Data Unit). In addition, the MESH messages respect the format of the Management MAC PDU (see §6.3.2.3 of IEEE Std 802.16e-2005) with the following considerations:

- the used CIDs (Connection Identifiers) are Fragmentable Broadcast and Primary Management;
- the values of the field Type (see Table-14 of IEEE Std 802.16e-2005) reserved for the purposes of the MESH layer are in the range 150-179.

Routing and forwarding the MESH signalling messages are executed directly by the MESH sublayer and are not entrusted to routing/transport protocols involved in the transmission of further warnings/data. Therefore, the MESH sublayer has an own address, an own routing protocol for compiling routing tables, and an own message routing mode. The address of the MESH nodes is a specific MAC address, which is additional with respect to that of the radio base section BS and of the mobile section MS of the node.

The mechanisms of routing MESH layers create MESH routing tables that contain "specific" entries of the type <MESH destination address, next-hop MAC address, n-hops, node-role>, where:

- MESH destination address is the MAC address of the destination node;
- next-hop MAC address is the address of the subsequent node in the path from end to end;
- n-hops identifies the number of nodes involved in the path from end to end (e.g., zero in the case of direct connection, number of hops in the case of relayed connection;
- node-role refers to the role (leaf, internal or root) of the node identified by the MESH destination address.

Moreover, the architecture of the node 2 of Figure 2 comprises a PHY-FRAMING sublayer common to both stacks and arranged between the respective PHY DIG-RADIO sublayer and the common RF sublayer, for enabling time-division access to the latter. The PHY-FRAMING sublayer imposes a new frame overstructure to those already present in Wireless MAN-OFDMA in the IEEE standard 802.16e-2005, as explained in greater detail hereinafter.

The described sublayers define a data/control plane connected to a management plane that supports operative functions and functions for managing the respective node 2, which can be provided in a known way and are thus not described.

In detail, the data/control plane manages both access of the mobile radio stations BS to the radio channel (management of the radio resources) and the topology of the mesh network.

Management of the radio resources of the network is divided into two levels: i) management within a WiMAX frame, directly controlled by purposely provided modules belonging to the sublayers MAC-CPCS of the BS STACK and MS STACK; ii) management of the "coexistence" between different mobile radio stations, controlled instead by the MESH sublayer. This coexistence requires the decision on the times (start of transmission and duration) that can be used by the specific node for the transmissions (as explained in greater detail hereinafter with reference to the structure of the PHY FRAMING sublayer). The attribution of this decision to the MESH sublayer thus enables high-level control of allocations of radio capacity for the different radio base stations.

Association between the nodes 2, and consequently modification of the network topology, can occur both in direct mode (issuing a command for new associations through the MESH sublayer of the root node) and in indirect mode (favouring the choice of some associations with respect to others, but leaving the control of the association to the node that changes its own direct association). The indirect mode is usually adopted when leaf nodes wish to change their own "father" node. In the case of entry into the network of a new node, which does not form part of the network, the network adopts a principle of maximum equality between nodes, seeking to incentivize as much as possible entry of new nodes. To this end, the root node leaves to the node that is attempting entry into the network the task of deciding on which other node to attempt the procedure of affiliation.

With reference once again to Figure 2, the management plane, having a function of configuring and monitoring alarms and failures through a centralized console, comprises a unit 10 for managing the MESH sublayer, a unit 12 for managing the sublayer MAC SSCS, a unit 14 for managing the sublayers CPCS and SSL, and a unit 16 for managing the physical sublayer PHY, each connected with the respective sublayers of both the BS stack and the MS stack. The units 10-16 are connected to a network-management centre 18, formed by a system of external computers and having the function of managing and supervising the network, in a per se known manner and thus not described in detail.

**MESH SUBLAYER**

In each node 2, the MESH sublayer is formed by a single computational/functional entity that integrates all processes, functionalities, and protocols for operating the mesh network and that interacts with the MAC sublayers of the BS and MS stacks present in the node, as shown in Figure 3.

In detail, the MESH sublayer has six interfaces I1-I6 for communicating with the BS and MS stacks in the node. Here, the three "odd" interfaces, I1, 13 and I5, are used for communications with the BS side, while the three "even" interfaces, 12, 14 and 16, are used for communications with the MS side. Furthermore, the interfaces I1-I4 are connected to the sublayers MAC-CPCS, and the interfaces I5 and I6 are connected to the sublayers MAC SSCS.

The interfaces I1-I6 are logically grouped into three homogenous pairs as regards exchanged data type. In particular:

- the interfaces I1 and I2 are dedicated to transmitting and receiving the messages of the MESH sublayer towards other nodes; they are in direct communication with the blocks belonging to the sublayers MAC-CPCS and transmit and receive the MESH management messages (as described in greater detail hereinafter) so as to send them to the radio interfaces of the nodes in the PHY RF sublayer.
- the interfaces 13 and 14 are dedicated to the exchange of control messages of the BS and MS stacks, respectively, and enable operation with other software modules that form the logic structure of the MAC layer and are present in the sublayers MAC-CPCS both of the BS stack and of the MS stack;
- the interfaces I5 and I6 are dedicated to exchanging messages with the higher protocol layers (such as layers 802.1D, switching modules, routing modules, etc., of a known type and thus not shown) for controlling routing/switching, and, to this end, co-operate with the Ethernet switching modules in the sublayers MAC SSCS.

It should be noted that, even though the interface I1 to the other sublayers of the BS stack is a single interface, it enables communication both through broadcast channels and through unicast channels towards the individual MSs.

The interfaces I1-I5 are connected with a single functional block, designated by 20, which integrates all procedures, functionalities, and protocols of the MESH sublayer. The functional block comprises a plurality of modules 21-27 that communicate with one another through internal messages that move along the lines and encapsulate some functionalities provided via software through one or more processes.

In detail, the functional block 20 comprises the following modules, connected together and with the interfaces I1-I6 as shown:

1. MESH-Controller module 21;
2. Dispatcher module 22;
3. HO (Handover)-Controller module 23;
4. Exploration-Controller module 24;
5. Measure-Controller module 25;
6. Topology-Manager module 26; and
7. Switching IW (Inter-Working) module 27.

The modules 21-27 of Figure 3 operate in a different way according to the role (root, leaf or internal) of the node within the mesh network, as indicated below.

1. MESH-Controller module 21

The MESH-Controller module 21 is the entity that manages the main operating characteristics of the network, among which: creation of the network, connection to a formed network, merging and splitting of a network into more than one subnetworks. It is activated upon turning-on of the respective node and during the turning-on step, as likewise during all transition steps; it assume the direct control of the BS stack and/or of the MS stack, according to the topological role of the node; it moreover manages the respective node, when the latter forms part of a mesh network, based on the topological position of the node as a leaf node, an internal node, or a root node. When the node including the considered MESH-Controller module 21 is a root node, it decides the role of the other nodes within the network, in particular when a topological change is necessary (node spacing, node approaching, changing of the topological position of the nodes). Furthermore, according to the position of the respective node in the topology, the MESH Controller 21 varies the use modes of its radio base section BS and of its mobile section MS. The mesh controller 21 further comprises a node visibility matrix 28, including a list of visible nodes, even though they are not connected directly to the radio base station BS of the considered node.

2. Dispatcher module 22

The Dispatcher module 22 is a software module that routes the MESH messages to the other nodes and to the other sublayers of the respective node. The Dispatcher module 22 is active irrespective of the role of the node, but its functionalities are completely activated only in internal nodes, where it is necessary to route messages through the interfaces I1 and I2 to both of the sublayers MAC-CPCS both of the BS stack and of the MS stack. Instead, in the case of root or leaf nodes, the messages are normally routed only through the BS stack or only to the MS stack.

3. HO-Controller module 23

This module manages handovers of the mobile section MS, i.e., the steps of modification of affiliation in the network of Figure 1. In particular, the HO-Controller module 23 executes different handover procedures, according to whether the node has a leaf, internal, or root topological role, co-operating with the handover procedures of the IEEE standard 802.16e-2005. To this end, the HO-Controller module 23 is connected to the MESH-Controller module 21 and, through the Dispatcher module 22, to the sublayer MAC-CPCS of the MS stack. In particular, based on the information of topological role supplied by the MESH-Controller module 21:

- Topological leaf role: the HO-Controller module 23 allows the MS stack to operate in "free" mode, i.e., the MS stack acts on the basis of the handover rules in the IEEE standard 802.16e-2005. In this case, the HO-Controller module 23 behaves as in a typical civil radio-mobile system and is not directly controlled by the MESH layer.
- Topological internal role: the HO-Controller module 23 directly manages the handover procedure, indicating to the sublayer MAC-CPCS and to the lower layers of its own MS side to which radio base station BS of which other node it should connect up. In this operating mode, handover execution control occurs in a centralized way following an explicit request to the root node of the own mesh network;
- Topological root role: in this situation, the station MS of the node is not connected to any other node and, thus, the HO-Controller module 23 is inoperative; furthermore the MS stack carries out measurements when the respective BS stack is not in operation.

4. Exploration-Controller module 24

The Exploration-Controller module 24 manages the steps for exploring the surrounding space by activating functions of the sublayers MAC-CPCS and PHY DIG-RADIO of its own radio base station BS that supervises the creation of an exploration frame; this, in effect, is a conventional frame without application information. Even though only the nodes in the leaf role can switch on their own radio base station BS in exploration mode, the Exploration-Controller module 24 is operative also when the node is an internal or root node, actually co-operating to the exploration procedure. In particular:

- In leaf mode, the Exploration-Controller module 24 manages switching-on of the radio base section BS of its own node based on the indications received from the root node and supplies to the latter the information of new nodes detected according to the IEEE standard 802.16e-2005.
- In internal or root mode, the Exploration-Controller module 24 sends appropriate commands to the leaf nodes that are connected to its own radio base station BS when they are to go in exploration, as established by the root node. As will be seen hereinafter, the internal nodes possess all the exploration indications for co-ordinating the measurements, while the leaf nodes are informed only when they have to perform an exploration.

5. Measure-Controller module 25

The Measure-Controller module 25 manages the procedures for measurement collection performed by the mobile station MS of the node when activated by the root node or upon entry into a new network. It operates according to the IEEE standard 802.16e-2005 procedures; here, however, the measurements have both the purpose of identifying the best point of entry in the network (i.e., to which node to affiliate) and of collecting the data of mutual visibility between the nodes of the network in order to enable/evaluate changes to the network topology. According to the role of the node within the network, the following cases may be distinguished:

- In leaf mode, the Measure-Controller module 25 is not operative.
- In internal or root mode, and on the basis of the commands of the root node, the Measure-Controller module 25 controls execution of the measurements by the mobile station MS in the time intervals envisaged and using the messages of the IEEE standard 802.16e-2005 for mobility management.

In particular, the Measure-Controller module 25 verifies the preamble associated to a message coming from a different node and identifies possible nodes that are extraneous to the network when detecting a preamble different from the ones in use in the network. In this case, the Measure-Controller module 25 sends an appropriate warning to the root node, for activating the new-node acquisition procedures.

### 6. Topology-Manager module 26

The Topology-Manager module 26 has the task of managing the network topology and has different tasks according to the role of the node:

- In internal nodes, the Topology-Manager module 26 has the function of reconstructing the topology of the subtree formed by the nodes directly or indirectly affiliated thereto.
- In root mode, the Topology-Manager module 26 has also the task of topology management, with the execution of the algorithms indicated above.
- The nodes with leaf role have the Topology-Manager module 26 de-activated.

### 7. Switching IW module 27

The Switching IW module 27 co-operates with the MAC sublayer SSCP, which has switching/routing functions, by transferring the topological information of the network to the higher layers (not shown) of the node structure 2 of Figure 2 in order to facilitate the task thereof.
The seven modules 21-27 that make up the MESH sublayer above described are present in each node of the network. Consequently, during the dynamic evolution of the network, the modules forming the functional block 20 of each node co-operate with one another to ensure the maintenance of the network.
The seven modules 21-27 communicate through the MESH messages. From the logic standpoint, the MESH-Controller module 21 of the root node controls the MESH-Controller modules 21 of the other nodes of the network in order to manage the transmitting capacity of the network; i.e., it controls the use of the macroslots of the PHY-FRAMING sublayer of Figure 2. In particular, the root node issues commands to the different nodes as to the transmitting configurations to be adopted and the MESH-Controller modules 21 of the different nodes process the commands received so as to apply the those configurations. Furthermore, in order to verify and optimize the transmitting resources of the PHY-FRAMING sublayer of the different nodes, the MESH-Controller module 21 of the root node communicates with the Exploration-Controller modules 24 of the different nodes in order to activate the procedures of periodic exploration by the nodes of the network.
Furthermore, as already indicated, the MESH-Controller module 21 of the root node can change the network topology, issuing implicitly or explicitly commands for the new MS-BS associations, i.e., new affiliations of nodes, co-operating with the HO-Controller modules 23 and the MESH Controller 21 of the nodes involved.
The MESH-Controller module 21 of the root node collects the topological information of the network through the messages sent thereto by the MESH-Controller modules 21 of the different nodes that signal the connections existing with the other nodes and the topological state of the affiliated nodes. The Measurement-Controller modules 25 supply instead information on the radio visibility of the nodes in the network.
Furthermore, the MESH-Controller modules 21 of the root node and of the internal nodes co-operate in updating the switching information when it is intended to reduce the topological association changing time for example following a Handover.
In this way, the MESH sublayer is able to co-operate with the other sublayers of the BS and MS stacks to implement the various functions envisaged according to the topological state of the node (root, internal, leaf or autonomous).

### PHY-FRAMING SUBLAYER

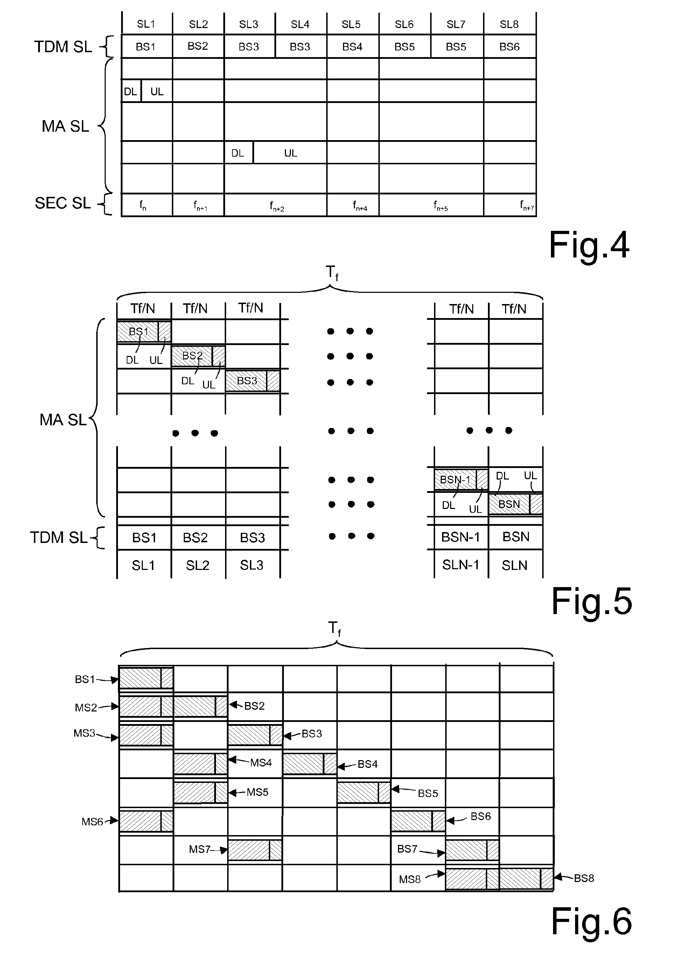

The PHY-FRAMING sublayer is structured on more sublayers able to associate a signal time division to a multiple-access technique and to a protection of the information based upon the frequency hopping, useful for some applications (e.g., military applications). To this end, the PHY-FRAMING sublayer is articulated in three sublayers (see Figure 4):

- A TDM (Time-Division Multiplexing) sublayer, referred to hereinafter also as TDM sublayer (TDM SL), for communication time multiplexing;
- A multiple-access sublayer on the time slot of the TDM sublayer (referred to hereinafter also MA sublayer or MA SL);
- A security sublayer, for communication security management (frequency hopping, referred to hereinafter also as SEC sublayer - SEC SL).
  In detail, the TDM sublayer for communication multiplexing uses a frame structure divided into N time slots. A same node can have more consecutive allocated slots (multislot, as shown in the example of Figure 4, containing eight slots, four whereof are grouped together in pairs to form two multislots SL3-SL4 and SL6-SL7 associated, respectively, to the radio base station BS3 and to the radio base station BS5). Each time resource of the TDM sublayer is then divided according to a time-division-duplex (TDD) logic. The MA sublayer allows more mobile stations MS belonging to nodes affiliated to the node including the considered radio base station BS (e.g., the mobile stations MS4 and MS5 of the nodes N4, N5 of Figure 1 affiliated to the node N2 having radio base station BS2) of accessing simultaneously (in the same slot) to the communication means, exploiting a multiple-access technique such as the OFDMA (Orthogonal Frequency-Division Multiple Access) mode or CDMA (Code-Division Multiple Access) mode.
  The SEC sublayer integrates the TDM and MA sublayers so as to protect the transmissions through the frequency-hopping technique. In fact, each slot SL1-SL8 is associated to a band of frequencies centred on different frequencies $f_n$ to $f_{n+7}$.

In practice, the SEC sublayer is not independent of the others, in particular of the TDM sublayer, because the frequency hops between adjacent slots occur in compliance with the TDM time division, as shown in Figure 4, where the index of the central-carrier frequency fk is incremented at each time slot (it undergoes a frequency hop). However, in the case of a number of adjacent slots, the central frequency fk is the same in all the adjacent slots.

## TDM sublayer

The frame of the TDM sublayer has a duration Tf and comprises N slots time-shifted by an amount equal to Tf/N and having a duration of Tf/N. The frame of the TDM sublayer is obtained by superimposing (summing) the frame of the MA sublayer, as shown in Figure 4.

Figure 5 shows the general frame structure of the TDM and MA sublayers in the case of frame divided into N slots (SL1-SLN) having a same duration; in addition, the slots can have different reciprocal durations (multi-slot, as in the case of Figure 4).

Each row of Figure 5 corresponds to a frame of the MA sublayer, which is divided, according to the TDD logic, into a downlink (DL) subframe and an uplink (UL) subframe of variable dimensions. More than one mobile stations MS of affiliated nodes can connect up to the radio base station BS that operates in a given slot according to the multiple-access policies decided by the MA sublayer, concentrating its own transmissions within the slot assigned to that radio base station BS. Figure 6 shows an example of subframe for the network of Figure 1, where the mobile stations MS2, MS3 and MS6 concentrate their own transmissions within the slot assigned to the radio base station BS1 to which they are connected. In practice, the internal nodes are active, as regards their own radio base station BS, in a first slot of MA sublayer and are active, as regards their own mobile station MS, in a different slot of MA sublayer.

As may be seen in Figures 4-6, the transmissions within the frame of the TDM sublayer are orthogonal, i.e., the downlink subframes DL are separated timely by the uplink subframes UL.

Each frame of MA sublayer is transmitted with a different time shift, which is multiple of the length of the slot. This shift is calculated with respect to a single time reference for the whole network, which requires a network synchronization between the radio base sections BSs of all nodes.

The physical PHY FRAMING sublayer contains a universal timing, given by the network or by the GPS signal, to which the internal clock of each node is aligned, via software, except for the deviations when the node loses synchronization. Consequently, if the GPS signal is available, the network synchronization is carried out via these signals; if GPS signals are not available, the root node imposes the network synchronization and transfers it to the mobile section MS of the nodes affiliated thereto. In this second case, the timing of the radio base section BS of the affiliated nodes is derived from that received from the respective mobile station MS and is in turn transferred to the mobile station MS of the nodes affiliated thereto; in this way, in all internal and leaf nodes of the network, the timing is received by the affiliating node and (only in the case of internal nodes) transferred to the affiliated node/nodes.

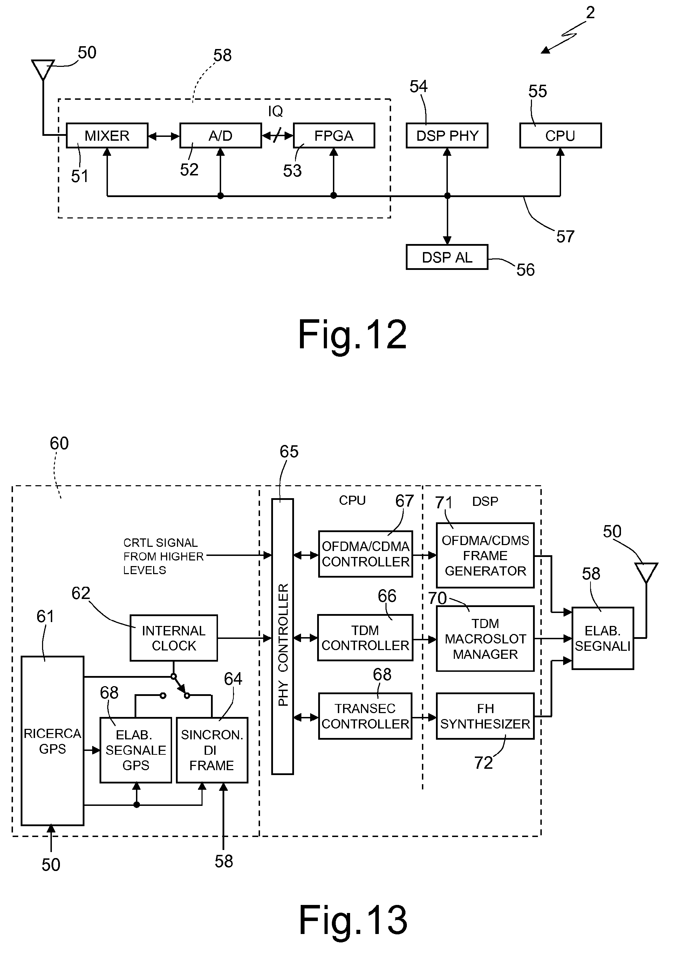

All the devices are designed so as to work in both modes, as shown in the block diagram of Figure 13. As first choice the device uses, if available, the GPS signal from which it obtains a universal time reference used to align its internal clock. If the GPS signal is absent, the timing is obtained from the root node through the procedure described hereinafter. The setting choice of the synchronization type is not fixed, but is made by each node of the network on the basis of the availability of the GPS signal or not (the GPS signal may not be ensured throughout the duration of activity of the network).

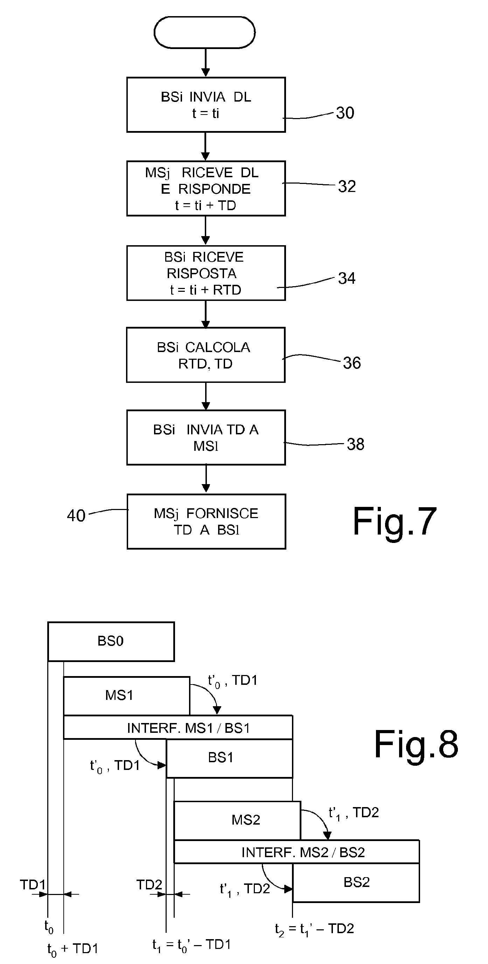

The timing used by the mobile section MS of each node takes into account the delay due to the propagation of the signal in the connection between the mobile section MS of the node in question and the radio base section BS of the node to which it is affiliated via a timing advance, having the purpose of compensating for the delay and obtaining a time alignment between the radio base section BS of one node and the mobile radio base section BS of the affiliated node. In the absence of the GPS signal, the delay is calculated with the procedure described hereinafter with reference to Figure 7.

In detail, during the affiliation procedure of a node NI to an affiliating node Ni of a network, or after loss of the GPS signal, at instant ti the affiliating node Ni (for example, a root node) sends, via its own radio base station BSi, a DL frame (step 30), which is received at an instant t = ti+TD by the mobile section MSI of the node NI undergoing affiliation, where TD is the propagation delay. The mobile section MSI of the node undergoing affiliation NI responds, by transmitting an appropriate message, to the affiliating node Ni (step 32; here any possible internal delays in detecting the DL frame and in sending the response are neglected). As soon as the affiliating node Ni receives the return message (at instant t = ti+RTD, where RTD - Round-Trip Delay - is the total propagation delay, step 34), it determines the value of the propagation delay TD.

The affiliating radio-base section BSi then transmits this value of the propagation delay TD to the node NI undergoing affiliation (step 38), which receives it within its own PHY-FRAMING sublayer and supplies it to its own radio base station BSI (step 40). In this mode, the section BSI can calculate the start of its frame, anticipating it, with respect to the detected initial moment of the received frames so as to take into account the propagation delay TD, and align with the frame of the node Ni.

The same procedure is repeated for all the subsequent nodes that are affiliating, determining respective propagation delays TD2, TD3, etc. Each node Ni can then calculate, with respect to the moment of start-of-frame received (perceived start-of-frame), the advance to be used for compensating for its own propagation delay and in this way aligning to the frame of the root node, as shown for example in Figure 8.

In particular, Figure 8 shows the synchronization time sequence in case of a root node N0, a node N1 affiliated to the root node N0 and a node N2 affiliated to the node N1. As is known, node N1 (after receiving the value of its own delay TD1, and calculating, via its own mobile station BS1, the instant t0, when the root node N0 had sent its own DL frame) via its own radio base station BSI sends its own downlink frame to the next node N2 at instant t1' = t0' - TD1 (where the prime sign indicates that the time is not absolute, but referred to the start of the frame). Likewise, after the synchronization procedure, node N2 knows its own delay TD2 and instant t1' and can generate its own downlink frame DL2 in advance, taking into account its own delay TD2.

In general, the radio base station BS of each node can also transmit in a slot not contiguous to the slot where its mobile station MS is active, but may use successive frames.

In presence of the GPS signal, each node can calculate directly its own propagation delay TD with respect to the node to which it is affiliated.

The total propagation delay RTD, and thus the advance TD that each non-root node uses for synchronized sending of its own frame, are calculated periodically by the nodes of the network so as to take into account the mobility of the nodes. Furthermore, they are calculated also each time there is a handover.

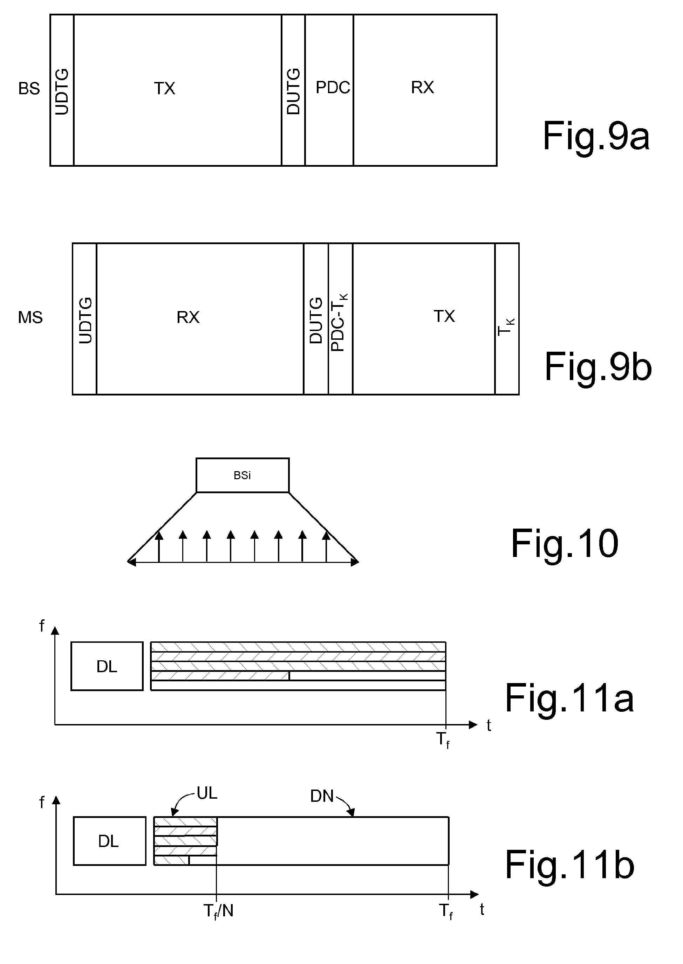

The network synchronization is moreover managed by inserting appropriate guard times: a first guard time DUTG (Downlink/Uplink Transition Gap) between the DL subframe and the UL subframe, and a second guard time UDTG (Uplink/Downlink Transition Gap) between the UL subframe and the DL subframe (Figures 9a and 9b, showing the subdivision of the slot as seen by a generic radio base station BS and the corresponding slot as seen by the mobile station MS affiliated to this radio base station BS). The guard times DUTG and UDTG are sized so as to include the transients for the passage from transmission to reception, and vice versa, as well as the transient due to the change of frequency linked to the SEC sublayer (frequency hopping); consequently, the guard times depend also upon the frequency-switching capacities of the PHY DIG-RADIO sublayer.

In order to take into account of the propagation delays TD referred to above with reference to Figures 7-8, each generic slot comprises a further compensation guard time referred to as PDC (Path Delay Compensation).

This guard time compensation PDC is distributed differently between the mobile station MS and the radio base station BS, also as a function of the mutual distance and depends upon the coverage radius of each individual network node: in order to guarantee, for example, a range of 13 km, it must be greater than 86.7 μs.

In particular, in order for the uplink signal (from a mobile station MS to the radio base station BS connected thereto) to arrive to the radio base station BS within the current macroslot, the transmission is anticipated of a variable time Tk equal to the total propagation delay RTD specific of that mobile station MS so as to take into account both the delay of reception of the start-of-frame and the propagation delay of the uplink transmission. In general:

$$0 \leq Tk \leq PDC,$$

with Tk = 0 for BS and MS at the minima distance
and Tk = PDC for BS and MS at the maximum distance.

The interlaced-frame structure of the sublayer SL causes a node that wished to enter into the network setting itself in listening mode on the working frequency to receive the signals of a number of radio base stations BS, time-shifted with respect to one another, and to decide on which time slot attempt access. The PHY FRAMING sublayer thus envisages that a node that attempts access will be able to carry out first a choice on which time slot of the sublayer SL to attempt access. This procedure occurs under the co-ordination of the MESH-Controller module 21 (Figure 3).

## MA sublayer

The MA sublayer provides the possibility for a plurality of nodes to access a same slot. In particular, more than one mobile station MS can communicate with the mobile radio station BS of the node to which a TDM time resource has been assigned, exploiting a multiple-access technique such as OFDMA or CDMA.

In this way, the communications between a radio base station BS and the respective mobile stations MS can be distinct and recovered either through the use of distinct codes (CDMA) or through an appropriate division of the time-frequency resources (OFDMA).

For example, Figure 10 shows the association of a slot attributed to a generic radio base station BSi in the case of a multiple-access technique OFDMA.

In the present case, the TDM subdivision of the homologous sublayer is transparent to the mobile stations MS: the frame of the MA sublayer (to which the mobile stations MS gain access) can have a duration in time virtually equal to Tf, even though in actual fact the nodes are enabled to communication only in the slot assigned to the TDM sublayer of duration Tf/N (Figure 11b, as explained in greater detail hereinafter). In this way, the connected mobile stations MS perceive only a radio base station BS with frame Tf and do not perceive the presence of the overlying TDM sublayer; thus, the mobile stations MS do not have additional hardware or software structures for managing the TDM sublayer.

To this end, each radio base station BS, and consequently the mobile stations MS affiliated thereto, should limit its own communications within the slot assigned thereto even though there is no such physical limit. In other words, at a physical level, the duration of the frame is equal to Tf, but the data can be allocated only in a portion thereof. To this end, the uplink and downlink subframes are limited. For the downlink subframe, it is sufficient that the limit between downlink and uplink is adaptive (already present in current standards). For the uplink frame, the areas envisaged by the WiMAX IEEE standard 802.16-2005 are used in a different way from what provided by the standard. In multi-carrier systems, in fact, where the allocation of the data occurs in two time-frequency dimensions, it can happen that the data are allocated first in time, up to the end of the frame, and then in frequency. For example, in the WiMAX standard referred to above, the allocation of the data in the frame occurs by rows (as shown in Figure 11a). This means that the transmission of data starts by filling the first row (at a first frequency), as far as the end of the frame (thus for all the time available), and then subsequently filling the following rows (each at a different frequency). The present advanced node (Figure 11b) exploits the area envisaged in the WiMAX standard and allocates the data by rows, delimiting the time-frequency portions in the MA subframe within the slot.

In practice, here, each slot is formed by a preset plurality of rows, where each row is associated to a respective frequency (according to what defined in the MA sublayer) and has a time duration exactly equal to Tf/N so that the data are allocated by rows only up to this limit. Thus, for each mobile station MS, the areas are used so as to not transmit data after the time Tf/N; after Tf/N there is only a virtual area with zero data, which cannot be used by the mobile station MS (area DN in Figure 11b).

## SEC sublayer

This sublayer, as indicated above, has the aim of enabling a frequency hopping, useful for security reasons. As known, frequency hopping is a transmission method where radio signals are transmitted by regularly modifying the carrier frequency according to a predetermined pseudorandom code (hopping sequence), known both to the transmitter and to the receiver.

The number of the hopping frequencies, K, depends upon three parameters: range of frequencies of the system (Bmin, Bmax); distance between the hopping frequencies ($\Delta$hop, hopping pitch); and bandwidth of the signal (B) and is calculated according to the following formula:

$$K = \left\lfloor \frac{B_{\max} - B_{\min}}{\Delta hop} \right\rfloor$$

with $\Delta$hop $\geq$ B. For example, Bmin = 200 MHz, Bmax = 400MHz and B = 5MHz or 10 MHz.

K represents also the process gain. A value greater of K increases the security characteristics of the transmission. For example, K = 20. The hopping frequency is such as to present a switching at each slot period (given by the TDM sublayer). In the case of multi-slot transmission, i.e., in a number of consecutive slots allocated to a radio base station BS, the frequency does not change, while the counter that scans the sequence of the hops is incremented regularly, slot by slot, as highlighted in Figure 4.

The adoption of the frequency hop is in any case useful for eliminating any possible sources of interference that can be generated intentionally or by other systems operating on the same band. If, nevertheless, situations of interference are created, it is possible to reduce the hopping frequency, or else change frequency, in any case in a co-ordinated way with the TDM sublayer.

Figure 12 shows a block diagram of the node 2. In detail, an antenna 50 is connected to a mixer 51, which performs a frequency conversion of the received signal in order to lower the frequency and enable sampling thereof by an A/D converter 52.

The A/D converter 52 generates IQ samples, for example, at 14 bit, and supplies them to an FPGA (Field Programmable Gate Array) block 53 that execute treatments of the signal (e.g., band filtering, decimation and interpolation) in preparation to the operations executed by a block DSP (Digital Signal Processor) PHY 54 connected thereto. The blocks 51-53 form a signal-processing unit 58.

The block DSP PHY 54 has the task of executing the functions of the physical layer, from the calculation of the FFTs/IFFTs to the operations linked to the OFDMA transmission/reception, and supplies the processed data to a central processing unit CPU 55, from which it receives also the data to be processed and transformed into analog signals, via the blocks 53, 52 and 51 to be transmitted on the outside through antenna 50.

The CPU 55 supervises and co-ordinates the steps both of the physical layer PHY and of the higher layers (MAC), and at a logic level plays the role of controller. The other logic functions reside entirely in other DSP blocks, designated by DSP AL 56. A data line 57 enables sending of control signals from the CPU 55 to the blocks 51-54, 56 of the node 2 and exchange of warnings/data necessary for operation. The data line 57 enables also the exchange of digital data between the blocks FPGA, DSP and CPU 53-56.

In practice, the A/D converter 52, the block FPGA 53, the block DSP PHY 54 and part of the CPU 55 form the PHY-DIG-RADIO sublayer of Figure 2.

Figure 13 shows a logic diagram for managing the PHY sublayers of the node of Figure 2.

In detail, a synchronization block 60, belonging to the PHY-FRAMING sublayer of Figure 2 and implemented, for example, by a DSP and dedicated electronic circuitry, comprises a GPS-search unit 61 connected to the antenna 50. The GPS-search unit 61 detects any GPS signal and controls an internal clock 62 on the basis of any detected GPS signal or, if this is not available, of the frame synchronization, including the timing advance described above with reference to the TDM sublayer. To this end, the GPS-search unit selectively activates or deactivates a processing unit of the GPS signal 63 and a frame-synchronization unit 64, which are connected selectively to the internal clock 62. In this way, the internal clock 62 is synchronized with the clock of the other nodes belonging to the network and generates a universal reference.

The internal clock 62 then supplies the universal time reference to a PHY controller 65, which receives also control information by the top layers so as to generate time references necessary to the controllers of the three described sublayers (TDM controller 66, OFDMA/CDMA controller 67 and TRANSEC controller 68).

In detail, the TDM controller 66 supplies a TDM slot/macroslot manager 70 with the timing necessary for generating the slots/macroslots and enabling implementation of the structure with the appropriate guard times. The TDM controller 66 supplies the OFDMA/CDMA controller 67 with the start instant of the slots and/or macroslots and their duration; on the basis of this information, the OFDMA/CDMA controller 67 generates the parameters corresponding to the current slot (CP - cyclic prefix, FFT dimension, number and characteristics of the bursts, uplink and downlink duration, etc.), then supplied to a OFDMA/CDMA frame generator 71.

The OFDMA/CDMA frame generator 71 creates the macroslot on the basis of the input parameters and, in the case of OFDMA modulation, generates the OFDMA symbols allocating the burst.

The TRANSEC controller 68 synchronizes with the input data coming from the TDM controller 66 and supplies a frequency-hopping (FH) synthesizer 72 with the parameters necessary for generating the hopping frequency corresponding to the current macroslot, on the basis also of possible macroslots, as indicated above.

The TDM macroslot manager 70, the OFDMA/CDMA frame generator 71 and the FH synthesizer 72 are finally connected to the units for processing data and signals 51-53 of Figure 12, here identified generically by the block RF 75, for processing and transmitting the signals.

Thanks to the structure and to the procedures described, the nodes are able to constitute a radiocommunication system that is autonomous, self-forming, self-supporting, resilient and safe as a radio interface such as to be able to be certified CC, EAL4+ and further levels. Each node contains inside it all the capacities for guaranteeing the radio connection with other nodes, for controlling it, as well as for routing the (traffic and service) communications in their travel through the network from the node that has generated them to the destination node through the repeater nodes.

Finally, it is evident that modifications and variations may be made to the node architecture described and illustrated herein, without thereby departing from the scope of the present invention, as defined in the attached claims.

**Claims**

1. A node structure (2) for wideband mobile-radio applications, configured to enable connection with further nodes (2) according to a role that can be dynamically selected among a network-manager role, an intermediate-node role, and a leaf role, wherein the network-manager role entails the execution of a network role assigning function, a communication frame management, and a management of a downlink transmission connection and of an uplink reception connection with at least one first node between said further nodes; the intermediate-node role entailing execution of management of a downlink reception connection and of an uplink transmission connection to a second node and management of a downlink transmission connection and of an uplink reception connection with at least one third node, different from the second node, for data-exchange functions; and the leaf role comprises only management of a downlink reception connection and of an uplink transmission connection for the data-exchange functions; the node structure (2) comprising a radio base station (BS), configured to execute said management of the downlink transmission and uplink reception connection, and a mobile station (MS), configured to execute said management of downlink reception and uplink transmission connection, the radio base station and the mobile station being each formed by a respective stack (BS STACK; MS STACK) of control layers that each include a data-connection functions managing layer (MAC) and a physical connection managing layer (PHY);
said data-connection functions managing layer (MAC) comprising a top interface unit (MAC SSCS); a basic-connection functions managing unit (CPCS) and a security functions managing unit (SSL), for each stack of control layers; and a network-information processing unit (MESH LAYER), common to both of said stacks of control layers and connected to said top interface units (MAC SSCS) and to said basic connection-functions managing units (CPCS) of both of said stacks;
and said physical connection managing layer (PHY) comprising a communication-time managing unit (PHY FRAMING) and a data signal generating unit (PHY RF), common to both said stacks.

2. The node structure according to claim 1, wherein said network-information processing unit (MESH LAYER) comprises a computation unit (20) including:

> a network-controller module (21) connected to a node-connectivity matrix (28), designed to contain connection and role information of further nodes of the network connected to said node structure through the mobile radio station (BS), the network-controller module (21) being connected to the basic-connection functions managing unit (CPCS) of both of the stacks for exchange of role-control messages;
> a message-routing module (22) connected to the network-controller module (21) and to the basic-connection functions managing unit (CPCS) of both stacks, designed to manage exchange of the role-control messages generated or received by the network-controller module (21);
> a role-change managing module (23), connected to the network-controller module (21) and to the message-routing module (22), designed to manage steps of role change of the node structure; a topology-management module (26), connected to the network-controller module (21) and to the message-routing module (22), designed to verify connection conditions between the node structure and the further nodes and to govern role changes, the topology-management module (26) being active only in case of the node structure having network-manager role; and
> a topological-information transfer module (27), connected to the topology-management module (26) and to the top interface units (MAC SSCS) of both stacks, designed to transfer topological information between them.

3. The node structure according to claim 2, wherein the computation unit (20) further comprises:

> an exploration-control module (24), connected to the network-controller module (21) and to the message-routing module (22), designed to govern procedures of exploration through the radio base station (BS) of the node structure; and
> a measurement-control module (25), which is connected to the network-controller module (21) and to the message-routing module (22) and is designed to control procedures of measurement of conditions of visibility of the further nodes and to supply the network-controller module (21) with measured visibility data for updating the node-connectivity matrix (28).

4. The node structure according to any one of claims 1-3, wherein the communication-time managing unit (PHY FRAMING) comprises a time-modulation frame controller (SL TDM, 66), designed to control sending of data units to the further nodes (2) at preset time intervals in the communication frame; a multiple-access controller (SL MA, 67), designed to control sending of the data unit to the further nodes in orthogonal mode in OFDMA/CDMA technique; and a security controller (SL SEC, 68), designed to govern transmission frequency variations of said data units in successive time intervals using a pseudorandom code.

5. The node structure according to claim 4, wherein the communication-time managing unit (PHY FRAMING) comprises a synchronization unit (30-40, 60) including an internal clock (62) having a synchronism input; a GPS search module (61), designed to seek a signal GPS and generate a GPS-synchronization activation/deactivation command; a GPS-signal processing module (63) and a internal-synchronism generation module (64), which receive said GPS-synchronization activation/deactivation command and is connected alternately to said internal clock (60).

6. The node structure according to claim 5, configured to be connected in an uplink reception and transmission condition to a hierarchically higher node having the network manager or internal manager role, wherein the internal-synchronism generation module (64) is activated in case of node structures having an internal or leaf role and comprises means (32) for detecting a received frame start instant coming from said hierarchically higher node, means for receiving information of delay with respect to said hierarchically higher node, and means for generating a synchronism signal for said internal clock (60) in advance with respect to said frame start instant.

7. The node structure according to claim 5, configured to be connected in a downlink transmission and reception condition to a hierarchically lower node having an internal or leaf role, wherein the communication-time managing unit (PHY FRAMING) comprises means (30) for transmitting a frame (DL) to the hierarchically lower node, means (34) for receiving a response from the hierarchically lower node, and means (36) for calculating information of delay of said response with respect to said transmitted frame.

8. The node structure according to claim 5, configured to be connected in uplink transmission condition to a hierarchically higher node having a network-manager or intermediate-node role, wherein the communication-time managing unit (PHY FRAMING) comprises means (63; 64) for determining a propagation delay of signals transmitted by said hierarchically higher node to said node structure; and means (65-66) for determining an uplink transmission advance with respect to said hierarchically higher node equal to said propagation delay.

**9.** A wideband mobile-radio network, comprising a plurality of nodes according to any one of claims 1-8.

**10.** A method for managing communications in a wideband mobile-radio network comprising a plurality of nodes (2), each having a radio base station (BS) and a mobile station (MS), comprising the steps of:

assigning a network-manager role to a first node;

wherein the first node performs the steps of:

assigning, to further nodes of the network, topological roles chosen between intermediate and leaf roles, wherein each node with intermediate role is affiliated to the node with network-manager role or to a node with intermediate role and affiliates a node with intermediate or leaf role; assigning a communication frame comprising a plurality of time intervals, associating at least one time interval to each node with network-manager and intermediate role, wherein each node with leaf role communicates with the network-manager node or intermediate role to which it is affiliated within the time interval associated to the respective node to which it is affiliated;

wherein data-unit transmissions by each node with network-manager and intermediate role to the respective affiliated nodes are managed in the respective radio base station (BS) and data-unit transmission by each node affiliated to the respective affiliating node are managed in the respective mobile station (BS) and said steps of assigning topological roles and assigning a communication frame are performed in a network information processing layer (MESH LAYER) common to said radio base stations and mobile stations; and wherein said data units are transmitted in the time intervals assigned to each node under the control of a communication-time managing layer (PHY FRAMING) common to said radio base stations and mobile stations.

**11.** The method according to claim 10, wherein said network information processing layer (MESH LAYER) performs steps of:

managing the network structure, including modifying dynamically the roles assigned to the nodes of the network; the input of new nodes in the network, including affiliating nodes not belonging to said plurality of nodes as nodes with leaf or internal role; managing mobility, including authorizing and forbidding role changes of said nodes; discovering new nodes and new networks, comprising establishing exploration time periods and sending commands to nodes with leaf role for activating exploration for seeking new nodes; managing problems of connection of nodes with internal role, comprising co-ordinating operations of connection maintenance of the nodes of the network; and collecting measurements, including creating a node visibility matrix and distributing said node visibility matrix to the nodes of the network.

**12.** The method according to claim 10 or 11, wherein associating a time interval comprises:

assigning a first portion of said time intervals to transmissions from nodes with intermediate role or network-manager role to respective affiliated nodes and assigning a second portion of said time intervals to transmissions from the respective affiliated nodes to said nodes with intermediate or network-manager role.

**13.** The method according to claim 12, wherein said data-unit transmission comprises allocation of data by rows, wherein each row is associated to a respective frequency and has a time duration (Tf/N) equal to the respective portion of said time intervals and each time interval comprises a preset number of rows.

**14.** The method according to any one of claims 10-13, wherein assigning topological roles comprises affiliating a group of nodes with internal or leaf role to an individual node with network-manager or internal role, and associating a time interval comprises modulating transmissions between said individual node and said group of nodes with a technique chosen between OFDMA and CDMA.

**15.** The method according to any one of claims 10-14, wherein the step of associating a time interval comprises the step of:

associating each time interval to an own frequency band.

**16.** The method according to claim 15, wherein associating a time interval comprises associating a plurality of consecutive time intervals to a same node with network-manager or internal role, wherein said plurality of consecutive time intervals are associated to a same frequency band.

**17.** The method according to claim 15 or 16, wherein each frequency band is chosen according to a pseudorandom code.

**18.** The method according to any one of claims 10-17, further comprising synchronizing said nodes of the network, including:

> seeking a GPS signal;
> in case of positive result of said seeking, synchronizing said plurality of nodes based on the GPS signal;
> in case of negative result of said seeking, generating an internal synchronization signal by said node with network-manager role and synchronizing said nodes with internal or leaf role based on said internal synchronization signal.

**19.** The method according to claim 18, wherein generating a internal synchronization signal comprises:

> calculating a first propagation delay of a first synchronization message from said node with network-manager role to an own affiliated node;
> calculating respective propagation delays of further synchronization messages from respective nodes with internal role to respective affiliated nodes;
> sending said respective propagation delays to said respective affiliated nodes;
>
> and wherein synchronizing comprises anticipating transmissions from said own affiliated node to said node with network-manager role by a time equal to said first propagation delay, and anticipating transmissions from said respective affiliated nodes to said respective nodes with internal role by a time equal to said respective propagation delays.

**20.** The method according to claim 12 or 13 or any one of claims 14-19, whenever depending upon claim 12, further comprising the step of inserting a guard interval (DUTG+PDC) between said first portion and said second portion of said time intervals, wherein each transmission from an affiliated node to a respective affiliating node in said second portion is anticipated by a time correlated to a distance between said affiliated node and the respective affiliating node.

Fig.1

Fig.2

Fig.3

Fig.4

Fig.5

Fig.6

```
        ┌──────────┐
        │          │
        └──────────┘
             │
             ▼
   ┌────────────────────┐
   │    BSi  INVIA  DL   │
   │       t = ti        │──── 30
   └────────────────────┘
             │
             ▼
   ┌────────────────────┐
   │   MSj  RICEVE  DL   │
   │     E  RISPONDE     │──── 32
   │      t = ti + TD    │
   └────────────────────┘
             │
             ▼
   ┌────────────────────┐
   │     BSi RICEVE      │
   │      RISPOSTA       │──── 34
   │     t = ti + RTD    │
   └────────────────────┘
             │
             ▼
   ┌────────────────────┐
   │    BSi CALCOLA      │
   │      RTD, TD        │──── 36
   └────────────────────┘
             │
             ▼
   ┌────────────────────┐
   │    BSi  INVIA TD A  │
   │        MSl          │──── 38
   └────────────────────┘
             │
             ▼
   ┌────────────────────┐
40 │    MSj FORNISCE     │
─── │     TD  A  BSl      │
   └────────────────────┘
```

# Fig.7

# Fig.8

Fig.9a

Fig.9b

Fig.10

Fig.11a

Fig.11b

## Fig.12

## Fig.13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT TO20070441 A